Europäisches Patentamt

European Patent Office

Office européen des brevets

(19)

(11) Veröffentlichungsnummer: **0 222 354 B1**

(12) **EUROPÄISCHE PATENTSCHRIFT**

(45) Veröffentlichungstag der Patentschrift: 22.05.91

(51) Int. Cl.5: **G01S 5/14, G01S 3/48**

(21) Anmeldenummer: 86115530.7

(22) Anmeldetag: 08.11.86

(54) **Einrichtung zur Richtungsbestimmung.**

(30) Priorität: 13.11.85 DE 3540212

(43) Veröffentlichungstag der Anmeldung:
20.05.87 Patentblatt 87/21

(45) Bekanntmachung des Hinweises auf die
Patenterteilung:
22.05.91 Patentblatt 91/21

(84) Benannte Vertragsstaaten:
DE FR GB IT NL

(56) Entgegenhaltungen:
US-A- 4 384 293

PATENTS ABSTRACTS OF JAPAN, Band 4,
Nr. 172 (P-38)[654], 27. November 1980; &
JP-A-55 117 977 (NIPPON MUSEN K.K.)
10.09.1980

(73) Patentinhaber: Standard Elektrik Lorenz Aktiengesellschaft
Lorenzstrasse 10
W-7000 Stuttgart 40(DE)

(72) Erfinder: Beier, Wolfgang
Alte Renninger Strasse 123
W-7252 Weil der Stadt(DE)
Erfinder: Graf, Helmut
Kaiserslauterer Strasse 62
W-7000 Stuttgart(DE)

(74) Vertreter: Schmidt, Werner, Dipl.-Phys. et al
Standard Elektrik Lorenz AG Patent- und Lizenzwesen Postfach 30 09 29
W-7000 Stuttgart 30(DE)

### Beschreibung

Die Erfindung geht aus von einer Einrichtung zur Richtungsbestimmung wie im Oberbegriff des Anspruchs 1 angegeben. Eine solche Einrichtung ist aus der US-A-4.384.293 bekannt.

Bei der dort beschriebenen Einrichtung wird die Ausrichtung einer linearen Antennenzeile in Bezug auf die Position eines Satelliten des Global Positioning System (GPS) bestimmt. Die Satellitenposition ist bei dem GPS bekannt. Der Ort, an dem sich die Einrichtung zur Richtungsbestimmung befindet, wird mit einem GPS-Empfänger ermittelt. Aus diesen Daten können zahlreiche Informationen ermittelt werden, z. B. Elevation, Azimut, räumliche Ausrichtung des Fahrzeugs oder Flugzeugs, in dem sich die Einrichtung zur Richtungsbestimmung befindet, usw. Abhängig davon, ob die Richtung in einer oder mehreren Ebenen bestimmt werden soll ist nur eine oder sind mehrere lineare Antennenzeilen vorgesehen.

Bei der bekannten Einrichtung weist die Antennenzeile mehrere Antennen auf und es wird so von einer Antenne zur nächsten weitergeschaltet, daß das Einrasten der Phasenregelschleife des GPS-Empfängers auf das empfangene Trägersignal erhalten bleibt.

Es ist weiterhin erwähnt, nur zwei Antennen zu verwenden. In diesem Fall werden verschiedenfrequente GPS-Trägersignale ausgewertet.

Aufgabe der Erfindung ist, eine Einrichtung zur Richtungsbestimmung der gattungsgemäßen Art anzugeben, bei der schnell von einer ersten zu einer zweiten Antenne umgeschaltet werden kann.

Wenn schnell zwischen den beiden Antennen umgeschaltet wird, dann sind die Phasen des Trägersignals, das von den beiden Antennen empfangen wird und aus deren Differenz die Richtung ermittelt wird, nahezu gleichzeitig meßbar. Dies ist bei der neuen Einrichtung möglich, da beide vorhandene Phasenregelkreise eingerastet bleiben. Dadurch fallen Fehler, die durch eine Bewegung der Einrichtung zur Richtungsbestimmung zwischen den beiden Messungen verursacht werden, weg. Entsprechendes gilt für den Frequenz- und Phasendrift der Bauelemente, die für die Meßgenauigkeit von Bedeutung sind.

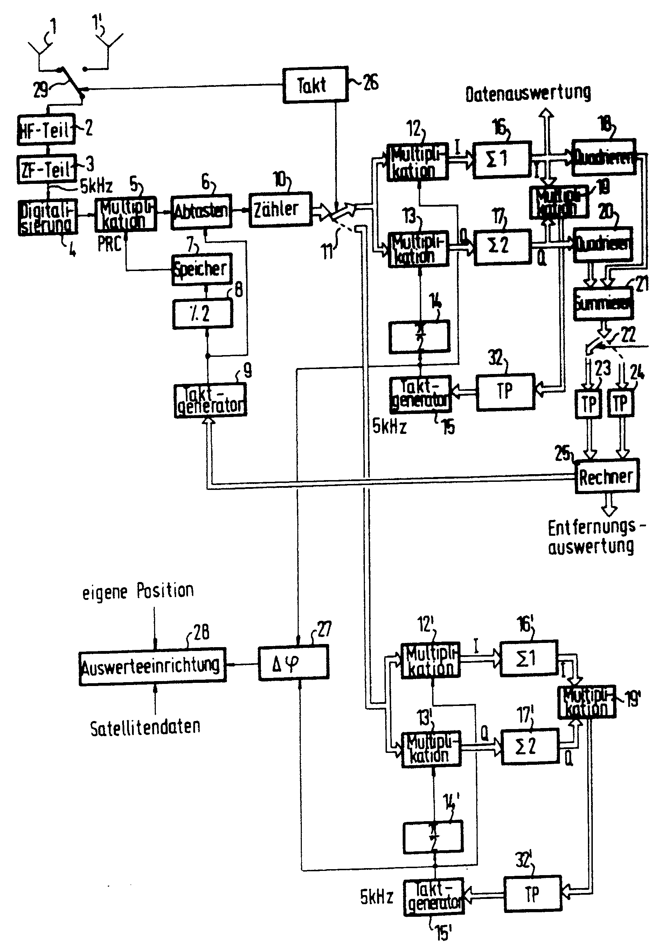

Die Erfindung wird anhand der einzigen Zeichnung, die ein Blockschaltbild der neuen Einrichtung ist, beispielhaft näher erläutert.

Es wird zunächst der GPS-Empfänger, wie er in der DE-A-34 27 058 beschrieben ist und danach die Erweiterung, die für die Richtungsbestimmung erforderlich ist, beschrieben.

Das von einem GPS-Satelliten abgestrahlte Signal wird von einer Antenne 1 empfangen und einem HF-Teil 2 zugeführt. In einem diesem nachgeschalteten ZF-Teil 3 erfolgt eine Frequenzumsetzung auf 5 kHz. Die ZF-Frequenz ist so gewählt, daß sie auch dann noch ungleich null ist, wenn die maximal zu erwartende Dopplerverschiebung auftritt. Das ZF-Signal wird in einer Digitalisierungsschaltung 4 digitalisiert, und zwar so, daß das digitale Signal den Wert "1" hat, wenn ein Schwellwert überschritten wird, und daß es den Wert "0" hat, wenn dieser nicht überschritten wird. Als möglicher Schwellwert ist die Amplitude null geeignet.

Das empfangene und mit den Daten modulierte Trägersignal ist von einem Rauschsignal überlagert, dessen Amplitude um ca. 20 dB über der des modulierten Trägersignals liegt. Ist kein Trägersignal vorhanden, dann ist die Anzahl der "0" und "1" im digitalisierten Signal gleich. Dieses digitalisierte Signal wird in einer Multiplikationseinrichtung 5 mit dem PRC multipliziert und das so erzeugte Signal wird in einer Abtasteinrichtung 6 abgetastet und zwar mit der doppelten Frequenz, mit der der PRC aus dem Speicher ausgelesen wird.

Das Signal weist nach der Multiplikationseinrichtung 5 dann keine Gleichverteilung der "0" und "1" mehr auf, wenn das Trägersignal, mit oder ohne Modulationssignal zur Datenübertragung, vorhanden ist. Die Verteilung der Häufigkeit der "0" und "1" ändert sich dann mit der ZF-Frequenz des Trägersignals, d. h. mit 5 kHz, wenn das empfangene Signal keiner Dopplerverschiebung unterworfen ist, oder mit einer Frequenz zwischen 500 Hz und 9,5 kHz bei den zu erwartenden Dopplerfrequenzen.

Das durch Abtasten erzeugte Signal wird einem Zähler 10 zugeführt. Falls kein Trägersignal vorhanden ist, nimmt der Zählerstand linear zu, während dann, wenn ein Trägersignal, mit oder ohne Modulationssignal, vorhanden ist, der zeitliche Verlauf des Zählerstandes eine Linie ergibt, deren Steigung abwechselnd größer und kleiner als die Steigung der Linie, die die lineare Zunahme des Zählerstandes wiedergibt,ist. Diese Zählerstände werden kontinuierlich zwei Multiplikationseinrichtungen 12 und 13 zugeführt. Diese Multiplikationseinrichtungen erhalten jeweils ein in einem Taktgenerator 15 erzeugtes Signal, das aus einer regelmäßigen Folge von "+1" und "-1" besteht. Die Taktfrequenz ist gleich der ZF-Frequenz, d. h. in ihr ist - soweit vorhanden - die Dopplerverschiebung enthalten. Das Signal für die Multiplikationseinrichtung 13 ist gegenüber dem Signal für die Multiplikationseinrichtung 12 um eine viertel Periode des ZF-Signals verschoben. Die Ausgangssignale der beiden Multiplikationseinrichtungen entsprechen den I - und Q-Anteilen der Signale wie sie auch bei den bekannten Empfängern erzeugt werden und diese werden auch hier bei dem neuen Empfänger zur Erzeugung von Regelsignalen verwendet.

In Summierschaltungen 16 und 17 wird jeweils für jede Periode des im Taktgenerator 15 erzeugten Taktsignals je ein Summenwert gebildet, und zwar die Summen

$$I = -Z(0) + 2Z(\pi) - Z(2\pi) \text{ und}$$
$$Q = -Z(0) + 2Z(\tfrac{\pi}{2}) - 2Z(\tfrac{3\pi}{2}) + Z(2\pi)$$

wobei die Summanden jeweils die Zählerstände zu den in den Klammern angegebenen Zeitpunkten sind. In der Zeichnung sind die Steuerleitungen, die gewährleisten, daß die Zählerstände zu den gewünschten Zeitpunkten weiterverarbeitet werden, nicht dargestellt, da es fachmännisches Wissen ist, die anhand der Zeichnung dargestellte Schaltung bei Kenntnis ihrer Funktion entsprechend zu ergänzen.

In einer Multiplikationseinrichtung 19 werden die Summen I und Q miteinander multipliziert und die durch die Multiplikation erzeugten Werte werden einem digitalen Tiefpaß 32 zugeführt. Das Ausgangssignal dieses Tiefpasses 32 regelt die Frequenz und die Phase des Taktgenerators 15 so, daß dessen Ausgangssignal gleichphasig und gleichfrequent zu dem in die ZF-Lage umgesetzten Trägersignal ist. Durch die Multiplikationseinrichtungen 12, 13, 19, die Summierschaltungen 16, 17, den Tiefpaß 32, den Taktgenerator 15 und die Phasenverschiebungseinrichtung 14 wird eine Costas-Regelschleife gebildet. Im eingeregelten Zustand gibt die Folge der von der Summierschaltung 16 abgegebenen Zahlenwerte I das Modulationssignal wieder, aus dem in an sich bekannter Weise in einer (nicht dargestellten) Auswerteeinrichtung die mittels des Modulationssignals übertragenen Daten gewonnen werden.

Die Werte I und Q werden nicht nur der Multiplikationsschaltung 19, sondern auch Quadrierschaltungen 18 und 20 zugeführt, in denen diese Werte jeweils quadriert werden. Die Quadrate dieser Werte werden in einer Summierschaltung 21 summiert und die Summenwerte, die ein Abbild der Amplitude des Trägersignals sind, werden alternierend (22) einem ersten 23 und einem zweiten 24 digitalen Tiefpaß zugeführt. Das Umschalten erfolgt in dem Takt, mit dem die zeitliche Lage des Auslesens des PRC aus einem Speicher 7 umgeschaltet wird (Dither-Frequenz; 125 Hz). Die Ausgangssignale der Tiefpässe 23, 24 werden einem Rechner 25 zugeführt, in dem die Summen und die Differenzen dieser Werte berechnet werden. Daraus wird in an sich bekannter Weise ein Regelsignal ermittelt, das die Phase des in einem Taktgenerator 9 erzeugten Taktsignals, das (nach Teilung des Taktes durch zwei in einem Teiler 8) das Auslesen des PRC aus dem Speicher 7 steuert, regelt. Das Taktsignal des Taktgenerators 9 ist außerdem das Taktsignal für die Abtastschaltung 6. Die Phasenregelung erfolgt so, daß der im Empfänger gespeicherte PRC dieselbe Phasenlage wie der PRC des empfangenen Signals aufweist. Die zeitliche Lage des PRC, bezogen auf eine Referenzzeit, ist proportional zur Entfernung des Empfängers zur Sendestation und wird deshalb ebenfalls zu der nicht dargestellten Auswerteeinrichtung geführt.

Der Taktgenerator 9, der Teiler 8, der Speicher 7, die Abtasteinrichtung 6, der Zähler 10, die Multiplikationseinrichtung 12, die Summierschaltungen 16, 17, die Quadrierschaltungen 18, 20, die Summierschaltung 21, die Tiefpässe 23, 24 und der Rechner 25 bilden eine an sich bekannte early/late-Regelschleife. Zur Realisierung dieser Regelschleife wird - zusätzlich zu den oben genannten Maßnahmen - wie aus der zitierten GPS-Literaturstelle bekannt das vom Taktgenerator 9 abgegebene Taktsignal periodisch (Taktfrequenz 125 Hz) um jeweils einen Takt vor- und zurückgestellt. Dies wird von dem Rechner gesteuert.

Für die early/late-Regelschleife gilt hinsichtlich der Darstellung des Blockschaltbildes in der Zeichnung dasselbe wie für die Costas-Regelschleife, daß nämlich die Taktsignale, die sich aus der beschriebenen Funktion zwingend ergeben, nicht dargestellt sind, da eine solche Ergänzung fachmännisches Wissen ist.

Ebenfalls fachmännisches Wissen ist es, wie die einzelnen Baugruppen realisiert werden. So kann beispielsweise die Multiplikationsschaltung 5 eine Exklusiv-ODER-Schaltung sein. Die Abtastschaltung 6 ist in besonders vorteilhafter Weise als JK-Flipflop realisiert, das den notwendigen Takt von dem Taktgenerator 9 erhält. Es ist weiterhin möglich - da an zahlreichen Stellen Zahlenwerte verarbeitet werden - einige der erwähnten Baugruppen durch einen Rechner zu realisieren.

In der obigen Beschreibung war jeweils von einem PRC die Rede. Bei dem GPS ist jedem Satelliten (dies sind die Sendestationen) ein spezieller PRC zugeordnet. Zur Navigation ist es erforderlich, gleichzeitig oder zumindest kurz nacheinander die Entfernungen zu mehreren Satelliten zu messen. Dies kann bei dem neuen Empfänger in vorteilhafter Weise im Zeitmultiplex erfolgen. Hierzu ist es notwendig, daß im Empfänger die PRC für die gewünschten Satelliten gespeichert sind. Nach jeweils einer Millisekunde wird vom einen zum nächsten PRC umgeschaltet und es werden während dieser Zeiten jeweils die oben beschriebenen Regelungen durchgeführt. Das Einrasten der Regelkreise auf alle gewünschten Satelliten bleibt erhalten und die Datendemodulation der von allen Satelliten empfangenen Signale ist ohne Unterbrechung möglich.

Bei der neuen Einrichtung wird zur Richtungsbestimmung das bekannte Interferometerprinzip angewandt. Dieses ist beispielsweise auch in der bereits genannten US-A-4.384.293 beschrieben, so daß hierauf nicht näher eingegangen wird. Es ist an dieser Stelle lediglich wichtig, zu wissen, daß die Phase des empfangenen Signals an zwei räumlich voneinander getrennten Stellen gemessen wird. Deshalb ist zusätzlich zu der Antenne 1 eine weitere Antenne 1' vorgesehen. Der Abstand dieser beiden Antennen hängt von der gewünschten Meßgenauigkeit ab. Die Meßgenauigkeit nimmt mit wachsendem Abstand zu. Hierbei ist jedoch zu beachten, daß wenn der Abstand L zwischen den beiden Antennen größer als λ ( λ ist die Wellenlänge des empfangenen GPS-Signals) wird, die Messung mehrdeutig wird. Zur Eindeutung gibt es mehrere bekannte Lösungen:

- Man führt eine zusätzliche Grobmessung durch,
- Es werden GPS-Signale mit unterschiedlichen Frequenzen ausgewertet,
- Die Grobrichtung wird unter Verwendung von Lot und Kompaß bestimmt.

Weil die Eindeutung fachmännisches Handeln ist wird hierauf nicht näher eingegangen.

Ein Schalter 29 leitet abwechselnd das von der Antenne 1 oder 1' empfangene GPS-Signal zu dem HF-Teil weiter. Weiterhin ist ein Schalter 11 vorgesehen, der das Ausgangssignal des Zählers 10 zu der beschriebenen Costas-Regelschleife oder zu einer weiteren Costas-Regelschleife weiterleitet. Die weitere Costas-Regelschleife enthält dieselben Baugruppen wie die erste Costas-Regelschleife. Zur Unterscheidung sind die Bezugszeichen jeweils mit einem Strich versehen.

Beide Schalter 29 und 11 werden zueinander synchron von einem Taktgenerator 26 gesteuert. Dadurch wird gewährleistet, daß das Ausgangssignal der ersten Antenne 1 zur ersten Costas-Regelschleife und das Ausgangssignal der zweiten Antenne 1' zur zweiten Costas-Regelschleife geleitet wird. Die Schaltfolge wird so gewählt, daß die Costas-Regelschleifen jeweils auf das ihnen zugeführte GPS-Signal eingerastet bleiben. Geringe Schwankungen während der "Aus"-Zeit werden während der "Ein"-Zeit ausgeregelt. Ursachen für solche Schwankungen können sein: Bewegung der Satelliten; endliche Oszillatorstabilität des Empfängers.

Bei dieser Anordnung ist es von großem Vorteil, daß die Bauteile des Empfängers, die bezüglich möglicher Schwankungen der Signallaufzeiten sehr kritisch sind (z. B. im HF-Teil), nur einmal vorhanden sind. Somit sind möglicherweise vorhandene Schwankungen für die von den beiden Antennen empfangenen GPS-Signale gleich. Die Costas-Regelschleifen, die für die Signale getrennt vorhanden sind, sind in diesem Zusammenhang unkritisch.

Es wurde bereits erwähnt, daß das Ausgangssignal des Taktgenerators 15 gleichphasig zu dem in die ZF-Lage umgesetzten empfangenen GPS-Signal ist. Entsprechendes gilt für das Ausgangssignal des Taktgenerators 15'. Deshalb wird aus der Phasendifferenz der Ausgangssignale der Taktgeneratoren 15, 15' nach dem Interferometerprinzip die Richtung ermittelt. Die Phasendifferenz Δ φ wird in einer Phasenmeßeinrichtung 27 gemessen. Der Meßwert wird in einer Auswerteeinrichtung 28 ausgewertet.

Abhängig davon, welche Richtung gemessen werden soll (Winkel zwischen Antennenzeile und einer Geraden zwischen Antennenzeile und Satellit; Richtung im Koordinatensystem usw.) werden der Auswerteeinrichtung zusätzlich die Satellitendaten und die eigene Position zugeführt. Diese Daten stehen in einem GPS-Empfänger ohnehin zur Verfügung.

Soll die Richtung im dreidimensionalen Raum ermittelt werden, dann ist mindestens noch eine weitere lineare Antennenzeile vorgesehen, die mit der ersten Antennenzeile vorzugsweise einen Winkel von 90° bildet. Eine Antenne kann beiden Antennenzeilen gemeinsam sein. Weiterhin ist es möglich, eine andere Antennenanordnung zu wählen. Es muß lediglich darauf geachtet werden, daß zur Auswertung das Interferometerprinzip angewandt werden kann und daß hierfür geeignete Antennenpaare ausgewählt werden können. Abhängig von der Zahl der auszuwertenden "Interferometeranordnungen" ist die Zahl der "Costas-Regelschleifen" gewählt. Die Schaltanordnung ist entsprechend angepaßt.

Auf die Auswertung wird hier im Einzelnen nicht eingegangen, da es sich hierbei um fachmännisches Handeln handelt.

Aufgrund der endlichen Rauschzahl im HF-Teil und des Phasenrauschens der Oszillatoren im Empfänger und in dem GPS-Satelliten werden die Phasen der in den Costas-Regelschleifen zurückgewonnenen Trägersignale statistisch über der Zeit schwanken. Dieser Fehler kann durch Mittelung verkleinert werden.

## Ansprüche

1. Einrichtung mit einer linearen Antennenzeile mit mindestens zwei Antennen, deren Abstand zwischen zwei benachbarten Antennen größer ist als die Wellenlänge eines empfangenen Global-Positioning-System-Signals (GPS-Signals), in welcher Einrichtung die Ausrichtung dieser Antennenzeile in bezug auf die Position eines Satelliten des GPS-Navigationssystemes ermittelt wird, welche weiterhin einen GPS-Empfänger mit einem einzigen HF-Teil (2) und mindestens einer Phasenregelschleife, die auf die Phase des empfangenen GPS-Signals einrastet und eine Phasenmeßeinrichtung (27) enthält, um die Ausrichtung der Antennenzeile nach dem Interferometerprinzip zu ermitteln, **dadurch gekennzeichnet,** daß der GPS-Empfänger für jede Antenne (1, 1') eine Phasenregelschleife (12, 13, 19, 16, 17, 32, 15, 14; 12', 13', 19', 16', 17', 32', 15', 14'), einen ersten und einen zweiten Schalter (11, 29), die mit dem Eingang und dem Ausgang des einzigen HF-Teiles jeweils verbunden sind, enthält, wodurch die Antennen über den einzigen HF-Teil mit der ihr jeweils zugeordneten Phasenregelschleife umgeschaltet werden, daß hierzu ein mit den Schaltern (11, 29) verbundener Taktgenerator (26) vorgesehen ist, daß die Umschaltfolge der beiden Schalter (11, 29) so gewählt ist, daß jede Phasenregelschleife auf das GPS-Signal, das von der ihr zugeordneten Antenne empfangen wird, eingerastet bleibt, und daß zwei Phasenregelschleifen, die zwei benachbarten Antennen zugeordnet sind, mit der Phasenmeßeinrichtung (27) derart verbunden sind, daß mindestens eine zur Auswertung nach dem Interferometerprinzip notwendige Phasendifferenz zwischen Ausgangssignalen dieser Phasenregelschleifen gemessen wird.

2. Einrichtung nach Anspruch 1, dadurch gekennzeichnet, daß in räumlich unterschiedlichen Richtungen mehrere Antennenzeilen vorgesehen sind.

## Claims

1. Apparatus comprising a linear antenna array having at least two antenna elements wherein the distance between two adjacent antenna elements is greater than the wavelength of a received Global-Positioning-System signal (GPS signal), wherein the pointing angle of said linear antenna array relative to the position of a satellite of the GPS navigation system is determined, and which includes a GPS receiver having a single RF section (2) and at least one phase-locked loop which locks with the phase of the received GPS signal, and a phase meter (27) for determining the pointing angle of the linear antenna array on the interferometer principle, **characterized in** that the GPS receiver includes a phase-locked loop (12, 13, 19, 16, 17, 32, 15, 14; 12', 13', 19', 16', 17', 32' 15', 14') for each antenna element (1, 1') and a first switch (11) and a second switch (29) connected to the input and output, respectively, of the single RF section, so that the antenna elements are connected to their respective associated phase-locked loops via the single RF section, that to this end, a clock generator (26) connected to the switches (11, 29) is provided, that the switching sequence of the two switches (11, 29) is chosen so that each phase-locked loop remains locked to the GPS signal being received by the associaed antenna element, and that two phase-locked loops associated with two adjacent antenna elements are connected to the phase meter (27) such that at least one phase difference necessary for evaluation on the interferometer principle is measured between the output signals of said phase-locked loops.

2. An apparatus as claimed in claim 1, characterized in that two or more linear antenna arrays are provided in spatially different directions.

## Revendications

1. Dispositif à rangée linéaire d'antenne comportant un minimum de deux antennes, dont la distance entre deux antennes voisines est supérieure à la longueur d'onde d'un signal reçu de Système de Positionnement Global (signal SPG), permettant de déterminer le dégauchissement de la rangée d'antenne par rapport à un satellite de Système de Navigation SPG, comportant également un récepteur SPG ayant un élément HF (2) unique et un minimum d'une boucle de réglage de phase, qui s'ajuste suivant la phase du signal SPG ainsi reçu et comporte un dispositif de mesure de phase (27), de manière à permettre le dégauchissement de la rangée d'antenne selon le principe de l'interféromètre, **caractérisé en ce que,** le récepteur SPG de chaque antenne (1, 1') comporte une boucle de réglage de phase (12, 13, 19, 16, 17, 32, 15, 14; 12', 13', 19', 16', 17', 32', 15', 14'), un premier- et un deuxième sélecteur (11, 29) dont chacun est raccordé à l'entrée et à la sortie de l'élément HF unique, la commutation desdites antennes étant assurée par la voie de l'élément HF unique avec la boucle de réglage de phase qui lui est subordonnée, qu'à cet effet un générateur de cadence (26) est prévu raccordé aux sélecteurs (11,29), que la commutation en séquence des deux sélecteurs (11, 29) est prévue de telle façon que chaque boucle de réglage de phase reste ajustée au signal SPG reçu depuis l'antenne qui lui est subordonnée, et que deux boucles de réglage de phase qui sont subordonnées aux deux antennes voisines, sont raccordées au dispositif de mesure de phase (27) de telle façon, qu'une phase différentielle au minimum nécessaire à l'évaluation selon le principe de l'interféromètre soit mesurée entre les signaux de sortie de ces boucles de réglage.

2.  Dispositif selon la revendication 1, **caractérisé en ce que,** plusieurs rangées d'antennes sont prévues en des directions spatiales différentes.